# EUROPÄISCHE PATENTSCHRIFT

(11) **EP 2 011 331 B1**
(45) Veröffentlichungstag und Bekanntmachung des Hinweises auf die Patenterteilung: **22.08.2018**
(21) Anmeldenummer: 07724278.2
(22) Anmeldetag: 16.04.2007
(51) Int. Cl.: H04N 5/225

(54) **BILDERFASSUNGSSYSTEM ZUR RUNDUMSICHT**
IMAGE RECORDING SYSTEM PROVIDING A PANORAMIC VIEW
SYSTÈME DE SAISIE D'IMAGE FOURNISSANT UNE VUE PANORAMIQUE

(30) Priorität: 25.04.2006 DE 102006019124
(43) Veröffentlichungstag der Anmeldung: 07.01.2009
(73) Patentinhaber: Fraunhofer-Gesellschaft zur Förderung der angewandten Forschung e.V., 80686 München (DE)
(72) Erfinder: DUPARRE, Jacques, 07745 Jena (DE); BRÄUER, Andreas, 07646 Schlöben (DE); SCHREIBER, Peter, 07749 Jena (DE)
(74) Vertreter: Pfenning, Meinig & Partner mbB
(86) Internationale Anmeldenummer: PCT/EP2007/003340
(87) Internationale Veröffentlichungsnummer: WO 2007/121886

(56) Entgegenhaltungen:
- DE-B3-102004 003 013
- US-A- 6 141 034
- US-B1- 6 252 603

## Beschreibung

Die Erfindung betrifft ein Bilderfassungssystem zur Rundumsicht aus zeilenförmig angeordneten optischen Kanälen mit einer Mikrolinse und einem in dessen Brennebene liegenden Detektor. Die Kameraeinheit ist dabei auf einer rotierenden oder rotationsschwingenden Rotationsachse montiert, wodurch eine Rundumsicht des Bilderfassungssystems ermöglicht wird. Verwendung finden derartige Bilderfassungssysteme in der Medizintechnik, auf Fahrzeugen, zur Inspektion von lochartigen Ausnehmungen sowie zur 360°-Bilderfassung in Räumen.

In der DE 10 2004 003 013 B3 wird eine Kamera beschrieben, bei der durch eine Differenz im Zentrumsabstand der Mikrolinsen und Detektorpixel ein lineares Anwachsen der Neigung der optischen Achsen von Kanal zu Kanal erreicht wird. Jeder Kanal "sieht" dadurch in die benachbarte Richtung der an ihn anschließenden Kanäle. Bei dem Auslesen der Detektorsignale in Form einer Matrix, in der der Reihe (und Spalte) nach die Signale der Pixel eingetragen sind, resultiert ohne weitere Sortierung der Signale der Pixel das Bild des abgebildeten Objektes. Es ist damit möglich, aus der Koordinate eines Kanals im Array formelmäßig seine Blickrichtung innerhalb des gesamten Gesichtfeldes der Kamera zuzuordnen, wodurch ein zweidimensionales Bild eines begrenzten Gesichtsfeldes entsteht. Oftmals ist jedoch eine Rundumsicht oder ein sehr großes Gesichtsfeld von Interesse. Herkömmliche, makroskopische Objektive für diesen Zweck sind sehr aufwändig und teuer und die Bildqualität wird zum Rand des Gesichtsfeldes hin zunehmend schlechter. Es kommt vor allem durch Verzeichnung zu einer Verzerrung des Bildes, so dass Objekte nicht mehr eindeutig identifiziert werden können. Eine zum Bildfeldrand reduzierte Modulationsübertragungsfunktion (MTF) verringert dementsprechend die Auflösung und die Lichtempfindlichkeit sinkt ebenfalls. Durch die in der DE 10 2004 003 013 B3 beschriebenen Design-Freiheitsgrade kanalweise abbildender Systeme können diese Probleme durch die individuelle Korrektur jedes Kanals auf seine individuelle Blickrichtung teilweise kompensiert werden, durch die planare Bauweise ist aber auch hier eine Rundumsicht ausgeschlossen.

Ausgehend von diesem Stand der Technik war es Aufgabe der vorliegenden Erfindung, ein zur Rundumsicht geeignetes Kamerasystem bereitzustellen.

Diese Aufgabe wird durch das gattungsgemäße Bilderfassungssystem mit den kennzeichnenden Merkmalen des Anspruchs 1 sowie das Verfahren zur Erfassung in Rundumsicht mit den Merkmalen des Anspruchs 35 gelöst. Die weiteren abhängigen Ansprüche zeigen vorteilhafte Weiterbildungen auf. In den Ansprüchen 38 bis 41 sind erfindungsgemäße Verwendungen genannt.

Erfindungsgemäß wird ein Bilderfassungssystem zur Rundumsicht bereitgestellt, das mindestens eine Kameraeinheit enthält, die aus zeilenförmig angeordneten optischen Kanälen mit einer Mikrolinse und einem in dessen Brennebene liegenden Detektor, der aus dem Mikrobild hinter der Mikrolinse einen Bildpunkt extrahiert, besteht. Unter Kameraeinheit ist hier eine eindimensionale Zeile optischer Kanäle zu verstehen. Die optischen Achsen der einzelnen optischen Kanäle weisen unterschiedliche Neigungen auf, wodurch sie eine Funktion des Abstandes des optischen Kanals vom Mittelpunkt der zugewandten Seite der Kameraeinheit darstellen, womit das Verhältnis der Größe des Gesichtsfeldes zur Bildfeldgröße gezielt bestimmbar ist. Die mindestens eine Kameraeinheit ist auf einer rotierenden oder rotationsschwingenden Drehachse montiert, wodurch eine Rundumsicht des Bilderfassungssystems ermöglicht wird.

Das erfindungsgemäße Bilderfassungssystem stellt durch die Nutzung einer oder mehrerer Kameraeinheiten, die längs ihrer Achse auf einer rotierenden oder rotationsschwingenden Achse angeordnet sind, ein bildgebendes optisches System dar, welches entlang der Rotationsrichtung durch serielle Aufnahme Rundumsicht frei von außeraxialen Bildfehlern ist, d.h. eine Aufnahme immer nur in Richtung der optischen Achsen der Kanäle (senkrecht zur Ebene der Mikrolinsen) sowie senkrecht dazu (in Richtung der Zeilenachse) ein Gesichtsfeld normaler Größe in Form eines Zeilenbildes gewährleistet.

Es können auch mehrere Kameraeinheiten, d.h. Zeilen, statt nur einer Zeile, nebeneinander angeordnet werden, um z.B. durch Redundanz der Bildaufnahme und Summation der Signale aus einer Blickrichtung die Belichtungszeit pro Zeilenaufnahme zu verringern und damit die Drehzahl der Kamera zu erhöhen, um z.B. eine höhere Bildwiederholrate des Rundumsichtbildes zu erzielen.

Das Bilderfassungssystem kann sich dabei permanent drehen oder aber rotationsschwingen. Die Drehachse ist dabei vorzugsweise mit einem Antrieb gekoppelt. So kann durch Verwendung eines Motors eine kontinuierliche Drehung ermöglicht werden, während ein Schrittmotor eine schrittweise Drehung ermöglicht. Eine Schwingung kann z.B. durch eine mit einer Feder gekoppelte Spule realisiert werden.

Hinsichtlich der kontinuierlichen Drehung bei Verwendung eines Motors weist das Bilderfassungssystem vorzugsweise Schleifkontakte für die Elektrik bzw. Elektronik auf. Weiterhin kann ein derartiges System optische Glasfasern im Drehzentrum der Achse bzw. Welle mit einer Stirnflächenkopplung oder einer dazwischen angeordneten abbildenden Optik (sog. "Rotierender Faseroptischer Interconnect") aufweisen. Eine weitere bevorzugte Ausführungsform sieht vor, dass in der Rotationsachse ein optoelektronischer Sensor, z.B. eine LED oder ein Laser, und ein Empfänger, z.B. eine Photodiode, gegenüber liegend angeordnet sind. Eine andere bevorzugte Ausführungsform betrifft die Ausgestaltung mit kabellosen Datenübertragungstechnologien, wie z.B. "bluetooth". Eine weitere erfindungsgemäße Variante für eine optische und damit drahtlose Energieübertragung besteht in der Kombination leistungsstarker Laserdioden mit Photodioden und der Nutzung des daraus resultierenden Photostroms zur Energieversorgung der Kameraeinheit. Auch die induktiven Energie- oder Datenübertragungsvarianten oder der Einsatz von Mikrowellen ist denkbar.

Hinsichtlich der Rotationsschwingung kann vorzugsweise eine verkabelte Variante, z.B. in optischer oder elektrischer Form, eingesetzt werden, sofern die Kabel eine ausreichende Flexibilität aufweisen.

Eine weitere bevorzugte Ausführungsform sieht vor, dass die Drehachse durch den Schwerpunkt des Bilderfassungssystems verläuft, um eine mechanische Auswuchtung zu erreichen. Auf diesem Wege können Unwuchten und die ungewollte Änderung der Blickrichtung der Kamera bei der Umdrehung senkrecht zur Drehrichtung vermieden werden. Anderenfalls ist ein sehr stabiler mechanischer Aufbau notwendig.

Weiterhin ist es bevorzugt, dass das Bilderfassungssystem zusätzlich Beleuchtungseinheiten aufweist. Diese können beispielsweise zwischen den Kanälen in Form von lichtemittierenden Flächen, insbesondere LEDs oder OLEDs, angeordnet sein. Ebenso ist es möglich, dass diese Beleuchtungseinheiten links und/oder rechts einer Kameraeinheit, d.h. einer bildaufnehmenden Zeile, angeordnet sind.

Die Kameraeinheit besitzt vorzugsweise eine Länge in Zeilenrichtung von 1 mm bis 10 cm und eine Breite von 100 µm bis 10 mm. Weiterhin ist es bevorzugt, dass die jeweiligen optischen Kanäle eine Baulänge im Bereich von 100 µm bis 10 mm aufweisen.

Eine weitere bevorzugte Variante des erfindungsgemäßen Bilderfassungsystems betrifft eine Ausführungsform, bei der der Mittenabstand, also der Pitch der Mikrolinsen, sich leicht von dem Pitch der Detektoren unterscheidet, um eine unterschiedliche Neigung der optischen Achsen für die einzelnen Kanäle zu gewährleisten.

Weiterhin ist es bevorzugt, dass sich die einzelnen Mikrolinsen hinsichtlich der Dezentrierung gegenüber dem Detektor, der Brennweite, der konischen und/oder asphärischen Parameter unterscheiden und somit unterschiedliche Neigungen der optischen Achsen ermöglichen.

Eine andere bevorzugte Ausführungsform sieht vor, dass in den einzelnen Mikrolinsen Mikroprismen integriert sind, die unterschiedliche Neigungen der optischen Achsen ermöglichen.

Die einzelnen Mikrolinsen können auf einer in Zeilenrichtung gewölbten Basisfläche angeordnet sein, wodurch sich unterschiedliche Neigungen der optischen Achsen realisieren lassen. Ebenso können die Detektoren auf einer in Zeilenrichtung gewölbten Basisfläche angeordnet sein.

Vorzugsweise sind für die unterschiedlichen Neigungen der optischen Achsen die optischen Kanäle frei von außeraxialen Aberrationen. Eine erfindungsgemäße Variante sieht vor, dass eine Korrektur von außeraxialen Bildfehlern durch Nutzung von unterschiedlichen anamorphotischen Linsen, insbesondere elliptischen Schmelzlinsen, für jeden einzelnen Kanal ermöglicht wird. Die Korrektur des Astigmatismus und der Bildfeldwölbung ermöglicht, dass das Bild über das gesamte Gesichtsfeld bzw. Bildfeld gleich scharf bleibt, da die Form der Linse jedes Kanals individuell an den zu übertragenden Einfallswinkel angepasst wird. Die Linse besitzt zwei unterschiedliche Hauptkrümmungsradien. Die Orientierung der Ellipsen ist stets so, dass die Achse eines Hauptkrümmungsradius in Richtung des sich vergrößernden Einfallswinkels und die des anderen Hauptkrümmungsradius senkrecht dazu steht. Beide Hauptkrümmungsradien wachsen mit steigendem Einfallswinkel nach analytisch ableitbaren Gesetzmäßigkeiten, wobei die Radien unterschiedlich stark zunehmen. Eine Einstellung des Hauptkrümmungsradienverhältnisses der Linse eines einzelnen Kanals kann durch das Einstellen des Achsenverhältnisses der Ellipsenbasis erfolgen. Die Einstellung der Änderung des Krümmungsradius von Kanal zu Kanal erfolgt durch die Einstellung der Größe der Achsen.

Weiterhin kann in einer erfindungsgemäßen Variante eine Korrektur der Verzeichnung, d.h. des Hauptstrahlfehlwinkels, durch eine Anpassung des Pinholes bzw. Detektors im Bild einer Mikrolinse erreicht werden. Eine Korrektur der Verzeichnung ist einfach durch eine nicht-konstante Pitch-Differenz zwischen Linsenarray und Pinhole bzw. Detektorarray möglich. Durch eine Anpassung der Position des Pinholes bzw. Detektors im Bild einer Mikrolinse je nach deren Position innerhalb des gesamten Bilderfassungsystems und demzufolge der zu verarbeitenden Blickrichtung kann das resultierende Gesamtbild komplett verzeichnungsfrei erzeugt werden. Um an ein Sensorarray mit konstanten Pitch angebracht zu werden, muss demzufolge die Position der jeweiligen Mikrolinse nicht nur um ein Vielfaches der Pitch-Differenz gegenüber dem Detektor versetzt sein, sondern dem realen zu verarbeitenden Hauptstrahlwinkel angepasst sein.

Eine weitere bevorzugte Variante sieht vor, dass die optischen Kanäle Strukturen aufweisen, die ein Übersprechen von Licht einer Mikrolinse auf den der benachbarten Mikrolinse zugeordneten Detektorpixel oder Pinhole verhindert. Dies verhindert ein Übersprechen, das zu einem verringerten Signal-Rausch-Verhältnis des abbildenden Systems führt.

Realisiert werden kann dies dadurch, dass die Strukturen aus voneinander optisch isolierten Kanälen bestehen. Hierzu zählen lichtabsorbierende Wände zwischen diesen Kanälen.

Eine weitere erfindungsgemäße Variante sieht vor, dass die Strukturen aus mindestens einer Aperturblendenanordnung bestehen, die zwischen Mikrolinsen und Detektoren angeordnet ist. Ebenso können mehrere Aperturblendenanordnungen in unterschiedlichen Ebenen zwischen Mikrolinsen und Detektoren angeordnet sein. In diesem Fall weisen die Aperturblendenanordnungen, vorzugsweise unterschiedliche Mittenabstände auf, und/oder sind mit unterschiedlichen Abstandsschichten zueinander und zu den Detektoren oder den Mikrolinsen beabstandet.

Wenn es angestrebt wird, dass die optischen Kanäle und die Mikrolinsen für eine Vergrößerung von etwa 1 ausgebildet sind, wird der objektseitige Raumwinkel, der jedem Kanal als Bildpunkt zugeordnet ist, in seiner Größe so eingestellt, dass im Objektabstand des abbildenden Systems die diesem Raumwinkel entsprechende laterale Ausdehnung gerade so groß wie der Abstand der Kanäle ist.

Vorzugsweise sind auf einem transparenten Objektivkörper vorder- und rückseitig eine den Mikrolinsen zugeordnete erste Aperturblendenanordnung und eine zweite Aperturblendenanordnung durch Beschichtung aufgebracht. Auf der ersten Aperturblendenanordnung ist ein Mikrolinsenarray und auf der zweiten Aperturblendenanordnung eine transparente Abstandsschicht aufgebracht. Unter der Abstandsschicht befindet sich ein Substrat mit einem Array aus Detektorpixeln, wobei gegebenenfalls ein Lochblendenarray auf der Abstandsschicht oder dem Substrat mit den Detektorpixeln aufgebracht ist.

Sowohl CMOS- als auch CCD-Sensoren können zur photoelektrischen Umwandlung genutzt werden. besonders attraktiv sind hier abgedünnte und rückseitig beleuchtete Detektoren, da sie sich besonders einfach für eine direkte Verbindung mit der Optik eignen und außerdem weitere Vorteile bezüglich der Sensitivität aufweisen. Ebenso ist es auch möglich, ein aus einem Polymer bestehendes Photosensorarray zu verwenden.

Vorzugsweise weisen die optischen Kanäle jeweils mehrere Detektoren unterschiedlicher Funktion auf.

Hinsichtlich der Zahl der Pixel pro Kanal besteht erfindungsgemäß sowohl die Möglichkeit, dass jedem Kanal ein Pixel zugeordnet ist, oder dass jedem Kanal mehrere Pixel zugeordnet sind. Unter Pixel ist im Rahmen dieser Anmeldung ein Bereich mit gewünschter spektraler Empfindlichkeit zu verstehen. Eine einfache Anordnung bedarf dabei nur eines einzigen elektronischen Pixels pro Kanal zur Bilderzeugung. Zur Anpassung an das Abbilddungskonzept sollte eine Pixelgröße der Optoelektronik entsprechend der beugungsbegrenzten Spottgröße von ungefähr 2 bis 3 µm gewählt werden, wobei der Pixel-Pitch in der Größenordnung von 50 bis 100 µm liegen sollte. Eine Nutzung des freien Platzes auf dem Sensor kann durch die Implementierung von intelligenter Pixelnahsignalvorverarbeitung geschehen. Viele Bildverarbeitungsaufgaben können bereits analog in dem Bildsensor, z.B. durch Operation zwischen Pixeln benachbarter oder nur wenig entfernter Kanäle, bewältigt werden. Hierzu zählen beispielsweise:
- Kontrast, Kontrastrichtung (Kantenorientierung)
- Bewegungsdetektion
- Auflösungserhöhung für Punktquellen (für Punktquellen kann eine Auflösung der Position im Gesichtsfeld weit genauer als das Beugungslimit der Optik erreicht werden, indem die Differenzen der Signale benachbarter Kanäle für den gleichen Objektpunkt ausgewertet werden.)
- Bestimmung des Schwerpunktes und der mittleren Ausdehnung einer Intensitätsverteilung.

Durch den Einsatz mehrerer Pixel mit verschiedenen Eigenschaften oder von Pixelgruppen mit Pixeln gleicher Eigenschaften in den einzelnen Kanälen kann eine Vielzahl zusätzlicher Bildinformationen bereitgestellt werden. Hierzu zählen:
Es kann eine Auflösungssteigerung über das Beugungslimit hinaus erreicht werden, sog. Sub-PSF-Auflösung (PSF = Punktbildverwaschungsfunktion). Hierzu müssen für jeden Kanal Gruppen von dichtgepackten gleichartigen Pixeln, d.h. 4 bis 25 Stück, mit einer Größe von ≤ 1 µm für die einzelnen Pixel realisiert werden. Das Zentrum der Pixelgruppe befindet sich an der gleichen Stelle wie die einzelnen Pixel gemäß der erfindungsgemäßen Variante, bei der nur ein Pixel pro Kanal eingesetzt wird. Das Zentrum der Pixelgruppe ist von der radialen Koordinate des betrachtenden Kanals im Array abhängig.

Weiterhin besteht die Möglichkeit, einen elektronischen Zoom, eine elektronische Blickrichtungsänderung oder eine elektronische Lichtstärkeeinstellung zu realisieren. Die Nutzung eines konventionellen dichtgepackten Bildsensors mit kleinen Pixeln, z.B. ein Megapixel-Bildsensor, kann zur Aufnahme der kompletten hinter allen Mikrolinsen des Arrays entstehenden Bilder genutzt werden. Durch Auswahl nur bestimmter Pixel aus den einzelnen Kanälen zur Erzeugung des gewünschten Bildes können die Vergrößerung bzw. das Gesichtsfeld eingestellt werden, da die Pixelposition im Kanal die Funktion der radialen Koordinate des betrachteten Kanals im Array ist. Ebenso kann die Blickrichtung durch einfache Translation aller ausgelesenen Pixel eingestellt werden. Weiterhin lässt sich die Lichtstärke durch Superpositionen der Signale benachbarter Pixel einstellen, wobei sich die effektive Pixelgröße erhöht, was zu einem Auflösungsverlust führt.

Durch Verrechnung aller Mikrobilder kann eine Auflösungserhöhung erreicht werden. Hierzu wird ein konventioneller dichtgepackter Bildsensor (Megapixel-Bildsensor) zur Aufnahme der kompletten hinter allen Mikrolinsen des Arrays entstehenden Bilder genutzt. Die einzelnen Mikrobilder haben einen minimalen lateralen Versatz gegeneinander durch die unterschiedliche Position der einzelnen Kanäle relativ zum Mittelpunkt des Arrays. Die Verrechnung dieser minimalen Verschiebung der Mikrobilder zu einem Gesamtbild resultiert in einem deutlich höher aufgelösten Bild als bei Aufnahme nur eines Bildpixels pro Kanal. Dies macht allerdings lediglich für mit der lateralen Kameraausdehnung vergleichbar geringe Objektabstände Sinn.

Ebenso werden Farbaufnahmen durch Anordnung von Farbfiltern vor mehreren sonst gleichartigen Pixeln pro Kanal ermöglicht. Das Zentrum der Pixelgruppe befindet sich dabei an der gleichen Stelle wie ein Einzelpixel bei der einfachen Variante mit nur einem Pixel pro Kanal, wobei das Zentrum der Pixelgruppe von der radialen Koordinate des betrachteten Kanals im Array abhängig ist. Eine elektronische Winkelkorrektur kann nötig sein. Um dies zu vermeiden, ist auch eine Kombination mit Farbbildsensoren möglich, deren drei farbempfindliche Detektorebenen übereinander und nicht nebeneinander angeordnet sind.

Weiterhin kann eine Erhöhung der Lichtstärke ohne Auflösungsverlust dadurch erreicht werden, dass mehrere gleichartige Pixel mit höherem Abstand in einem Kanal angeordnet werden. Mehrere Kanäle blicken dadurch von unterschiedlichen Stellen der Kamera in die gleiche Richtung. Eine nachträgliche Superposition zueinandergehöriger Signale erhöht die Lichtstärke ohne gleichzeitig die Winkelauflösung zu verringern. Dabei variiert die Position der Pixelgruppe relativ zur Mikrolinse minimal von Kanal zu Kanal, sodass eine Abtastung des Gesichtsfeldes analog zur Variante mit nur einem Pixel pro Kanal geschieht. Der Vorteil dieser Variante ist, dass aufgrund der Tatsache, dass mehrere Kanäle gleichzeitig den gleichen Bildpunkt erzeugen, das Rauschen sich nur statistisch akkumuliert, d.h. es korreliert mit der Wurzel der Photonennzahl, aber dass das Signal sich linear akkumuliert. Es resultiert somit eine Verbesserung des Signal-Rauschverhältnisses.

Eine weitere erfindungsgemäße Variante sieht vor, dass eine Anordnung gewählt wird, bei der sich durch die Anordnung mehrerer Pixel pro Kanal die optischen Achsen wenigstens zweier Kanäle in einem Objektpunkt schneiden. Dafür darf weiterhin die Gegenstandsweite nicht zu groß gegenüber der lateralen Kameraausdehnung sein, d.h. entscheidend für eine gute Tiefenauflösung bei der Abstandsmessung ist eine möglichst große Basislänge der Triangulation. Kanäle, die aus verschiedenen Richtungen auf den gleichen Objektpunkt schauen, sollten deswegen einen möglichst großen Abstand haben. Dabei ist die Nutzung mehrerer Pixel pro Kanal hierfür zwar sinnvoll, aber nicht zwingend notwendig. Alternativ können unmittelbar nebeneinander auch Kanäle mit jeweils nur einem Pixel angeordnet sein, die aber in stark unterschiedliche Richtungen blicken, sodass sie mit Kanalpaaren auf der gegenüberliegenden Seite der Kamera ein Schneiden der optischen Achsen ermöglichen. Durch diese Anordnung wird eine stereoskopische 3D-Bildaufnahme bzw. eine Abstandsmessung, d.h. Triangulation, ermöglicht, da hierfür unter verschiedenen Winkeln auf den gleichen Objektpunkt geschaut werden muss.

Durch die Nutzung mehrerer Detektorpixel pro Kanal kann die notwendige Kanalzahl verringert werden. Ein Kanal kann durch die Nutzung mehrerer Detektorpixel, welche unterschiedlich gegenüber der Mikrolinse dezentriert sind, gleichzeitig verschiedene Blickrichtungen abdecken. Weniger notwendige Kanäle bedeutet somit, dass die Gesamtfläche der Kamera kleiner wird. Anamorphotische bzw. elliptische Linsen können trotzdem zur Korrektur von außeraxialen Bildfehlern eingesetzt werden, wenn die Detektorpixel spiegelsymmetrisch bezüglich der Mikrolinsenmitte angeordnet sind, da sie jeweils den Einfallswinkel korrigieren.

Eine weitere Variante sieht die Möglichkeit von Farbaufnahmen durch diffraktive Strukturen auf oder vor den Mikrolinsen vor, wobei diese Gitter wahlweise über das Array konstant sein können, aber auch von Kanal zu Kanal variable Parameter, wie Orientierung, Blaze oder Periode besitzen können (strukturierte Gitter). Mehrere gleichartige Pixel geeigneten Abstandes in einem Kanal nehmen das durch das Gitter räumlich getrennte Spektrum auf. Im Allgemeinen kann das Gitter auch durch andere dispersive Elemente ersetzt werden, die ein Ablenken unterschiedlicher Wellenlängen auf getrennte Pixel ermöglichen. Der einfachste denkbare Fall hierfür wäre die Nutzung der chromatischen Queraberrationen zur Farbaufteilung, wobei gänzlich auf zusätzliche Elemente verzichtet werden kann.

Eine andere Variante betrifft die Polarisationsempfindlichkeit der Kamera. Zu deren Beeinflussung können verschieden orientierte Metallgitter bzw. strukturierte Polarisationsfilter vor sonst gleichartigen elektronischen Pixeln in jedem Kanal angeordnet werden. Das Zentrum der Pixelgruppe befindet sich an der gleichen Stelle wie die einzelnen Pixel bei dem System, das pro Kanal einen Pixel aufweist, und ist von der radialen Koordinate des betrachteten Kanals im Array abhängig. Alternativ können die Polarisationsfilter auch in der Ebene der Mikrolinsen integriert, z.B. auf diese aufgebracht werden, wobei dann ein Kanal nur eine bestimmte Polarisationsrichtung detektieren kann. Benachbarte Kanäle werden dann mit unterschiedlich orientierten Polarisationsfiltern ausgestattet.

Eine weitere Variante sieht einen abbildenden Farbsensor vor, wobei alternativ zu der normalerweise durchgeführten RGB-Farbkodierung hier eine Anpassung an das zu verarbeitende Farbspektrum durch entsprechende Wahl der strukturierten Filter erfolgt.

Die Pixelgeometrie kann beliebig an die Symmetrie der Abbildungsaufgabe angepasst werden, z.B. kann alternativ zur kartesischen Anordnung eine radialsymmetrische, eine hexagonale, bzw. anderweitig in ihrer Geometrie angepasste Anordnung der Facetten gewählt werden.

Gemäß einer weiteren Ausführungsform kann auch eine Kombination mit Flüssigkristallelementen (LCD) erfolgen. Die Polarisationseffekte können genutzt werden, um z.B. elektrisch schaltbare oder verschiebbare oder polarisierbare Lochblenden über sonst fixen, dichtgepackten Detektorarrays anzuordnen. Hierdurch wird eine hohe Anzahl von Freiheitsgraden der Abbildung erreicht.

Die hier beschriebenen Funktionen können auch durch die Integration der die Pixel des einzelnen Kanals unterscheidenden Strukturen/Elemente in die Ebene der Mikrolinsen erzielt werden. Hierbei ist dann wiederum nur ein elektronischer Pixel pro Kanal nötig und die Kanäle unterscheiden sich in ihren optischen Funktionen und nicht nur in ihren Blickrichtungen. Eine gröbere und einfachere Strukturierung der Elektronik ist die positive Folge. Nachteil ist die u.U. notwendige größere Kanalzahl und der damit verbundene größere laterale Platzbedarf für eine gleichwertige Auflösung. Auch eine Kombination mehrerer unterschiedlicher Pixel pro Kanal mit unterschiedlichen optischen Eigenschaften verschiedener Kanäle kann sinnvoll sein. Da das beschriebene System im Wafermaßstab hergestellt werden kann, ist es möglich, durch Vereinzelung nicht einzelner Kameras sondern ganzer Gruppen (Arrays von Kameras) die Lichtstärke der Aufnahme zu erhöhen, indem einfach mehrere Kameras das gleiche Bild aufnehmen (Winkelkorrektur kann nötig sein) und diese Bilder dann elektronisch überlagert werden.

Weiterhin ist es bevorzugt, dass die mindestens eine Kameraeinheit und der Antrieb in einem Glas- oder Kunststoffgehäuse eingefasst sind. Die Einhausung des Bilderfassungsystems kann dabei z.B. in Glas- oder Kunststoffröhrchen erfolgen. Durch Deckelung auf den Stirnflächen dieser Röhrchen kann eine hermetische Versiegelung bewirkt werden, wobei nur wenige Verkabelungen aus dem Gesamtsystem herausgeführt werden müssen.

Erfindungsgemäß wird ebenso ein Verfahren zur Erfassung von Bildern in Rundumsicht bereitgestellt, bei dem das zuvor beschriebene erfindungsgemäße Bilderfassungssystem eingesetzt wird.

Eine erste Variante der Verfahrensführung beruht darauf, dass die mindestens eine Kameraeinheit mit einer so geringen Geschwindigkeit um die Drehachse gedreht wird, dass das Bild mit einer Umdrehung von 360°, d.h. einer kompletten Umdrehung der Kamera, erzeugt wird. Jede Umdrehung liefert somit ein neues Bild.

Eine zweite erfindungsgemäße Variante des Verfahrens sieht vor, dass die mindestens eine Kameraeinheit mit einer so hohen Geschwindigkeit um die Drehachse gedreht wird, dass nach mehreren Umdrehungen von 360° durch redundante Bildaufnahme und anschließende Summierung der Signale das Bild erzeugt wird. Hierbei ist eine korrekte Synchronisation von Drehzahl und Summationstakt erforderlich.

Da sich weiterhin die Kamera während auch noch so einer kurzen Belichtungszeit weiter dreht, muss darauf geachtet werden, dass die Verwaschung der Bildinformation durch Weiterrotationen während der Integrationszeit eines Zeilenbildes nicht wesentlich größer als die Verwaschung des Zeilenbildes durch die MTF der statischen Pfeile selbst ist. Andererseits kann durch Differenzenmessung bei leichter Blickrichtungsänderung der Zeile durch Rotation die Auflösung, z.B. zur Kantendetektion, deutlich erhöht werden. Dies erfolgt durch teilweise Überlappung der Kanalblickrichtung und entsprechende Verrechnung der Signale.

Verwendung findet das erfindungsgemäße Bilderfassungssystem in allen Bereichen, in denen eine Rundumsicht in einem kompakten abbildenden optischen System von Interesse ist. Hierzu zählen beispielsweise die Inspektion von Löchern beliebiger Art, ebenso wie die 360°-Bilderfassung in Räumen. Ein anderes Anwendungsgebiet ist die Medizintechnik, z.B. in der Endoskopie. So kann das erfindungsgemäße Bilderfassungssystem z.B. in einem Endoskop untergebracht sein, wobei das Bild der Endoskopumgebung über den gesamten Umfang und eine gewisse Länge in Form eines Zylindermantels geliefert wird.

Ein weiteres Anwendungsgebiet ist der Einsatz des erfindungsgemäßen Bilderfassungssystems auf Fahrzeugen.

Anhand der nachfolgenden Figuren soll das erfindungsgemäße Bilderfassungssystem näher erläutert werden, ohne dieses auf die hier gezeigten speziellen Ausführungsformen einschränken zu wollen.
Fig. 1A zeigt eine erfindungsgemäße Kameraeinheit in Draufsicht.
Fig. 1B zeigt eine erfindungsgemäße Variante des Bilderfassungssystems in der Seiteansicht als Schnittdarstellung.
Fig. 1C zeigt eine zweite erfindungsgemäße Variante des Bilderfassungssystems in der Seitenansicht, dargestellt als Schnittdarstellung.
Fig. 2 zeigt ein erfindungsgemäßes Bilderfassungssystem in dreidimensionaler Darstellung.

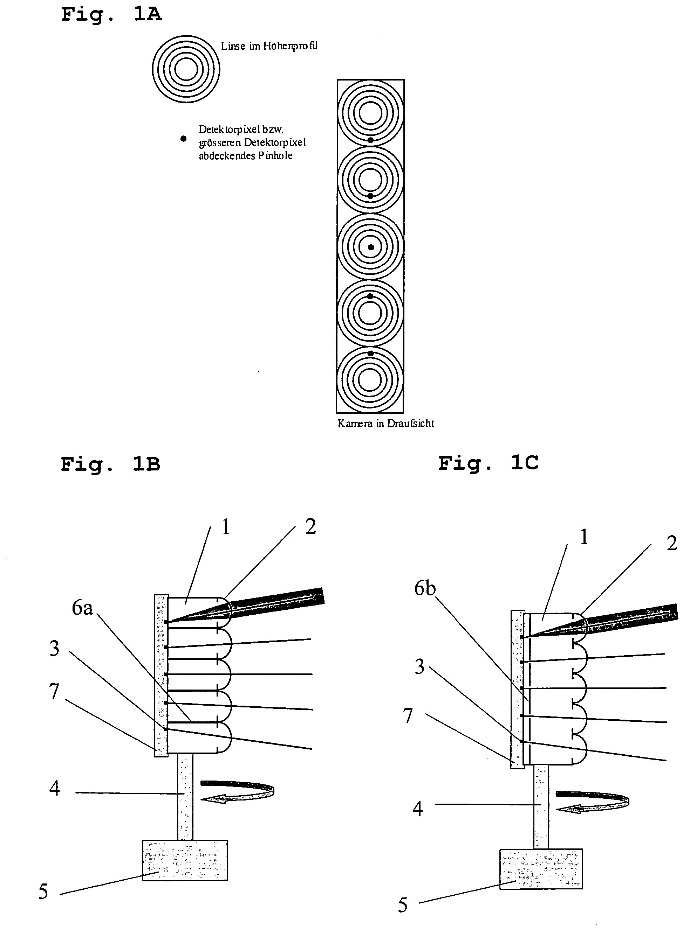

In Fig. 1A ist eine erfindungsgemäße Kameraeinheit mit vertikal angeordneten Mikrolinsen dargestellt. Die einzelnen Mikrolinsen sind hierbei anhand von Höhenlinien dargestellt. Die in Fig. 1A angeordneten schwarzen Punkte stellen die Detektorpixel bzw. Pinholes dar, die größere Detektorpixel abdecken.

In Fig. 1B ist eine Seitenansicht eines erfindungsgemäßen Bilderfassungssystems dargestellt. Der Objektivkörper 1 ist mit mehreren Mikrolinsen 2 mit zugehörigen Aperturblenden versehen. Diese Einheit ist auf einem Empfänger- bzw. Detektorpixelsubstrat 7, in oder auf dem eine nicht abgebildete Leiterplatine angeordnet ist, aufgebracht. Hier werden die Detektorpixel 3 bzw. durch kleinere Pinholes abgedeckte Detektorpixel größerer Fläche abgebildet. Die Kameraeinheit ist dabei auf einer beweglichen Drehachse 4 angeordnet, die mit einem Antrieb 5 verbunden ist. In der hier dargestellten Variante handelt es sich um eine rotierende Drehachse. Zur Unterdrückung von Geisterbildern weist das hier dargestellte Bilderfassungssystem absorbierende Wände zwischen den einzelnen Kanälen auf, um ein Übersprechen von Licht einer Mikrolinse auf den der benachbarten Mikrolinse zugeordneten Detektorpixel oder Pinhole zu verhindern.

Fig. 1C entspricht vom Aufbau dem Bilderfassungssystem nach Fig. 1B, wobei hier allerdings zur Unterdrückung von Geisterbildern ein zusätzliches Aperturblendenarray 6b zwischen Mirkolinsen und Detektoren angeordnet ist.

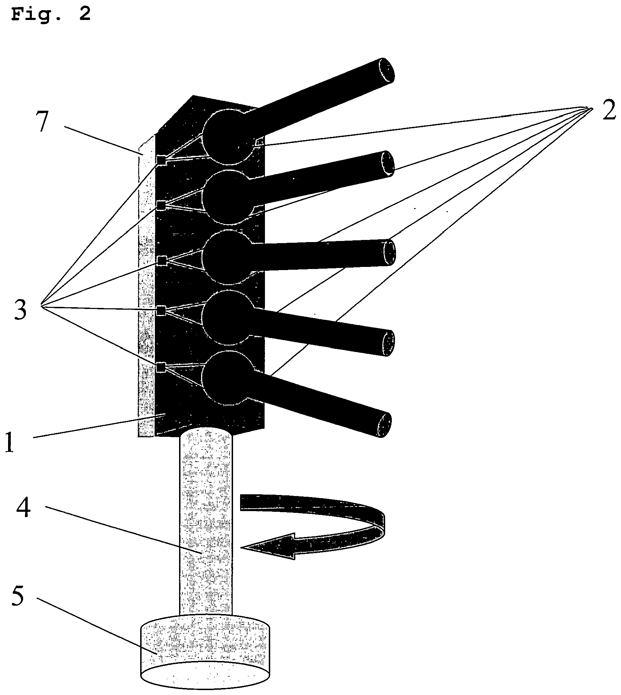

In Fig. 2 ist ein erfindungsgemäßes Bilderfassungssystem in dreidimensionaler Darstellung gezeigt. Der Objektkörper 1, auf dem die Mikrolinsen 2 angeordnet sind, ist auf einem Empfänger- bzw. Detektorpixelsubstrat 7 aufgebracht. Diese Elemente zusammen mit einer nicht abgebildeten Leiterplatine bilden die erfindungsgemäße Kameraeinheit. Die Kameraeinheit ist auf einer Drehachse 4 angeordnet, die mit einem Antrieb 5 verbunden ist. Auch die hier dargestellte Variante basiert auf einer rotierenden Drehachse.

## Patentansprüche

1. Bilderfassungssystem zur Rundumsicht enthaltend eine Kameraeinheit oder zur Erhöhung der Bildwiederholrate des Rundumsichtbildes mehrere Kameraeinheiten aus einer eindimensionalen Zeile optischer Kanäle mit einer Mikrolinse und mindestens einem in dessen Brennebene liegenden Detektor, der aus dem Mikrobild hinter der Mikrolinse einen Bildpunkt extrahiert, wobei die optischen Achsen der einzelnen optischen Kanäle unterschiedliche Neigungen aufweisen, dass sie eine Funktion des Abstandes des optischen Kanals vom Mittelpunkt der zum Bild gewandten Seite der Kameraeinheit darstellen, womit das Verhältnis der Größe des Gesichtsfeldes zur Bildfeldgröße gezielt bestimmbar ist und wobei die Kameraeinheit auf einer rotierenden oder rotationsschwingenden Drehachse montiert ist, wodurch eine Rundumsicht des Bilderfassungssystems ermöglicht wird.

2. Bilderfassungssystem nach Anspruch 1, **dadurch gekennzeichnet, dass** das Bilderfassungssystem zusätzlich Beleuchtungseinheiten aufweist, die bevorzugt zwischen den optischen Kanälen oder zeilenförmig neben den optischen Kanälen angeordnet sind.

3. Bilderfassungssystem nach einem der vorhergehenden Ansprüche,
**dadurch gekennzeichnet, dass** die Kameraeinheit eine Länge in Zeilenrichtung von 1 mm bis 10 cm und/oder eine Breite von 100 µm bis 10 mm und/oder die optischen Kanäle eine Baulänge von 100 µm bis 10 mm aufweisen.

4. Bilderfassungssystem nach einem der vorhergehenden Ansprüche,
**dadurch gekennzeichnet, dass** der Mittenabstand, d.h. Pitch, der Mikrolinsen sich leicht von dem Pitch der Detektoren unterscheidet, um eine unterschiedliche Neigung der optischen Achsen für die einzelnen Kanäle zu gewährleisten.

5. Bilderfassungssystem nach einem der vorhergehenden Ansprüche,
**dadurch gekennzeichnet, dass** sich die einzelnen Mikrolinsen hinsichtlich der Dezentrierung gegenüber dem Detektor, der Brennweite, der konischen und/oder asphärischen Parameter unterscheiden und somit unterschiedliche Neigungen der optischen Achsen ermöglichen.

6. Bilderfassungssystem nach einem der vorhergehenden Ansprüche,
**dadurch gekennzeichnet, dass** die einzelnen optischen Kanäle unterschiedliche Pitch-Differenzen zwischen Mikrolinse und Detektor und/oder Pinhole zur Korrektur einer Verzeichnung aufweisen.

7. Bilderfassungssystem nach einem der vorhergehenden Ansprüche,
**dadurch gekennzeichnet, dass** die optischen Kanäle Strukturen aufweisen, die ein Übersprechen von Licht einer Mikrolinse auf den der benachbarten Mikrolinse zugeordneten Detektorpixel oder Pinhole verhindern.

8. Bilderfassungssystem nach einem der beiden vorhergehenden Ansprüche,
**dadurch gekennzeichnet, dass** die Strukturen aus mindestens einer Aperturblendenanordnung, die zwischen Mikrolinsen und Detektoren angeordnet ist, bestehen.

9. Bilderfassungssystem nach Anspruch 8,
**dadurch gekennzeichnet, dass** auf einen transparenten Objektivkörper vorder- und rückseitig eine den Mikrolinsen zugeordnete erste Aperturblendenanordnung und eine zweite Aperturblendenanordnung durch Beschichtung aufgebracht sind, auf die erste Aperturblendenanordnung ein Mikrolinsenarray und auf die zweite Aperturblendenanordnung eine transparente Abstandsschicht angeordnet ist und unter der Abstandsschicht ein Substrat mit einem Array aus Detektorpixeln liegt, wobei ggf. ein Lochblendenarray auf der Abstandsschicht oder dem Substrat mit den Detektorpixeln aufgebracht ist.

10. Bilderfassungssystem nach einem der vorhergehenden Ansprüche,
**dadurch gekennzeichnet, dass** zumindest ein Teil der Mikrolinsen anamorphotisch ist.

11. Bilderfassungssystem nach einem der vorhergehenden Ansprüche,
**dadurch gekennzeichnet, dass** die Detektoren als ein CCD, ein CMOS-Photosensorarray und/oder ein aus einem Polymer bestehenden Photosensorarray vorliegen.

12. Bilderfassungssystem nach einem der vorhergehenden Ansprüche,
**dadurch gekennzeichnet, dass** die mehrere Pixel pro optischem Kanal so angeordnet sind, dass sich die optischen Achsen von mindestens zwei optischen Kanälen in einem Objektpunkt schneiden, um eine stereoskopische 3D-Bildaufnahme und/oder eine Abstandsmessung zu ermöglichen.

13. Bilderfassungssystem nach einem der vorhergehenden Ansprüche,
**dadurch gekennzeichnet, dass** die mindestens eine Kameraeinheit und der Antrieb in einem Glas- oder Kunststoffgehäuse eingefasst ist.

14. Verfahren zur Erfassung von Bildern in Rundumsicht, bei dem ein Bilderfassungssystem nach einem der vorhergehenden Ansprüche eingesetzt wird und die mindestens eine Kameraeinheit mit einer so geringen Geschwindigkeit um die Drehachse gedreht wird, so dass mit einer Umdrehung von 360° das Bild erzeugt wird.

15. Verwendung des Bilderfassungssystems nach einem der Ansprüche 1 bis 14 in der Medizintechnik, z.B. in der Endoskopie, zur Inspektion von lochartigen Ausnehmungen, auf Fahrzeugen oder zur 360°-Bilderfassung in Räumen.

## Claims

1. An image recording system for a panoramic view including a camera unit or, to increase the refresh rate of the panoramic image, a plurality of camera units composed of a one-dimensional row of optical channels having a microlens and at least one detector that is disposed in the focal plane of said image recording system and that extracts a picture element from the microimage behind the microlens, wherein the optical axes of the individual optical channels have different inclinations such that they represent a function of the distance of the optical channel from the center of the image-facing side of the camera unit so that the ratio of the size of the field of view to the image field size can be directly determined, and wherein the camera unit is mounted on a rotating or rotationally vibrating pivot axle, whereby a panoramic view of the image recording system is made possible.

2. An image recording system according to claim 1, **characterized in that**
the image recording system additionally has illumination units that are preferably arranged between the optical channels or in cell form beside the optical channels.

3. An image recording system according to one of the preceding claims, **characterized in that**
the camera unit has a length in the row direction of 1 mm to 10 cm and/or a width of 100 µm to 10 mm; and/or **in that** the optical channels have an overall length of 100 µm to 10 mm.

4. An image recording system according to one of the preceding claims, **characterized in that**
the center-to-center distance, i.e. the pitch, of the microlenses slightly differs from the pitch of the detectors to ensure a different inclination of the optical axes for the individual channels.

5. An image recording system according to one of the preceding claims, **characterized in that**
the individual microlenses differ with respect to the decentration with respect to the detector, the focal length, the conical and/or aspherical parameters and thus enable different inclinations of the optical axes.

6. An image recording system according to one of the preceding claims, **characterized in that**
the individual optical channels have different pitch differences between the microlens and the detector and/or have a pinhole for correcting distortion.

7. An image recording system according to one of the preceding claims, **characterized in that**
the optical channels have structures that prevent crosstalk of light from a microlens onto the detector pixel or pinhole associated with the adjacent microlens.

8. An image recording system according to one of the two preceding claims, **characterized in that**
the structures comprise at least one aperture diaphragm arrangement that is arranged between microlenses and detectors.

9. An image recording system according to claim 8,
**characterized in that**
a first aperture diaphragm arrangement associated with the microlenses and a second aperture diaphragm arrangement are applied by coating at the front and rear sides to a transparent objective body; **in that** a microlens array is arranged on the first aperture diaphragm arrangement and a transparent spacing layer is arranged on the second aperture diaphragm arrangement; and **in that** a substrate having an array of detector pixels is disposed below the spacing layer, with a pinhole array optionally being applied to the spacing layer or to the substrate having the detector pixels.

10. An image recording system according to one of the preceding claims, **characterized in that**
at least a part of the microlenses is anamorphic.

11. An image recording system according to one of the preceding claims, **characterized in that**
the detectors are present as a CCD, as a CMOS photosensor array and/or as a photosensor array comprising a polymer.

12. An image recording system according to one of the preceding claims, **characterized in that**
the plurality of pixels per optical channel are arranged such that the optical axes of at least two optical channels intersect at an object point to enable a stereoscopic 3D image recording and/or a distance measurement.

13. An image recording system according to one of the preceding claims, **characterized in that**
the at least one camera unit and the drive are enclosed in a glass housing or a plastic housing.

14. A method of acquiring images in a panoramic view in which an image recording system according to one of the preceding claims is used and the at least one camera unit is rotated about the axis of rotation at such a low speed that the image is generated with a rotation of 360°.

15. Use of the image recording system according to one of the claims 1 to 14 in medical technology, e.g. in endoscopy, for inspecting hole-like recesses, on vehicles or for 360° image recording in rooms.

## Revendications

1. Système de saisie d'image destiné à fournir une vue panoramique, contenant une unité de caméra ou, pour augmenter la fréquence de rafraîchissement de l'image panoramique, plusieurs unités de caméra, composé d'une ligne unidimensionnelle de canaux optiques avec une microlentille et au moins un détecteur, situé dans son plan focal, qui, derrière la microlentille, extrait de la micro-image un pixel, les axes optiques des canaux optiques individuels présentant des inclinaisons différentes de sorte qu'ils représentent une fonction de l'écart entre le canal optique et le point central du côté de l'unité de caméra tourné vers l'image, avec quoi le rapport de la grandeur du champ visuel à la grandeur du champ d'image peut être défini de façon spécifique, et l'unité de caméra étant montée sur un axe de rotation rotatif ou oscillant en rotation, ce qui permet une vue panoramique du système de saisie d'image.

2. Système de saisie d'image selon la revendication 1,
**caractérisé en ce que** le système de saisie d'image présente en plus des unités d'éclairage qui sont de préférence disposées entre les canaux optiques ou en forme de ligne près des canaux optiques.

3. Système de saisie d'image selon l'une des revendications précédentes,
**caractérisé en ce que** l'unité de caméra présentent une longueur dans la direction de ligne de 1 mm à 10 cm et/ou une largeur de 100 µm à 10 mm et/ou les canaux optiques présentent une longueur hors tout de 100 µm à 10 mm.

4. Système de saisie d'image selon l'une des revendications précédentes,
**caractérisé en ce que** l'entraxe, c'est-à-dire le pas, des microlentilles diffère légèrement du pas des détecteurs pour assurer une inclinaison différente des axes optiques pour les canaux individuels.

5. Système de saisie d'image selon l'une des revendications précédentes,
**caractérisé en ce que** les microlentilles individuelles diffèrent en ce qui concerne le décentrage par rapport au détecteur, la focale, les paramètres coniques et/ou asphériques et permettent ainsi des inclinaisons différentes des axes optiques.

6. Système de saisie d'image selon l'une des revendications précédentes,
**caractérisé en ce que** les canaux optiques individuels présentent des différences de pas différentes entre la microlentille et le détecteur et/ou le sténopé afin de corriger une distorsion.

7. Système de saisie d'image selon l'une des revendications précédentes,
**caractérisé en ce que** les canaux optiques présentent des structures qui empêchent une diaphonie de lumière d'une microlentille sur le pixel de détecteur ou sténopé affecté à la microlentille voisine.

8. Système de saisie d'image selon l'une des deux revendications précédentes,
**caractérisé en ce que** les structures se composent d'au moins un agencement de diaphragme d'ouverture qui est disposé entre des microlentilles et des détecteurs.

9. Système de saisie d'image selon la revendication 8,
**caractérisé en ce qu'**un premier agencement de diaphragme d'ouverture affecté aux microlentilles et un deuxième agencement de diaphragme d'ouverture sont, côté avant et côté arrière, appliqués par revêtement sur un corps d'objectif transparent, un groupe de microlentilles est disposé sur le premier agencement de diaphragme d'ouverture et une couche d'espacement transparente est disposée sur le deuxième agencement de diaphragme d'ouverture, et un substrat avec un groupe de pixels de détecteur est situé sous la couche d'espacement, un groupe de diaphragmes à trou étant éventuellement appliqué sur la couche d'espacement ou sur le substrat avec les pixels de détecteur.

10. Système de saisie d'image selon l'une des revendications précédentes,
**caractérisé en ce qu'**au moins une partie des microlentilles est anamorphosique.

11. Système de saisie d'image selon l'une des revendications précédentes,
**caractérisé en ce que** les détecteurs se présentent an tant que CCD, groupe de photocapteurs CMOS et/ou groupe de photocapteurs composé de polymère.

12. Système de saisie d'image selon l'une des revendications précédentes,
**caractérisé en ce que** les plusieurs pixels sont disposés par canal optique de telle sorte que les axes optiques d'au moins deux canaux optiques se coupent dans un point objet pour permettre une prise de vue 3D stéréoscopique et/ou une mesure de distance.

13. Système de saisie d'image selon l'une des revendications précédentes,
**caractérisé en ce que** l'unité de caméra au moins au nombre de un et l'entraînement sont logés dans un boîtier en verre ou en matière plastique.

14. Procédé destiné à la saisie d'images en vue panoramique, dans lequel un système de saisie d'image selon l'une des revendications précédentes est utilisé, et l'unité de caméra au moins au nombre de un est amenée à tourner autour de l'axe de rotation avec une vitesse suffisamment faible pour produire l'image avec une rotation de 360°.

15. Utilisation du système de saisie d'image selon l'une des revendications 1 à 14 dans la technique médicale, par exemple en endoscopie, pour l'inspection de creux du type trou, sur des véhicules ou pour la saisie d'image de 360° dans des locaux.
